## Europäisches Patentamt

(19) **European Patent Office**

Office européen des brevets

(11) Publication number: **0 083 496**
**B1**

## (12) EUROPEAN PATENT SPECIFICATION

(45) Date of publication of patent specification: **03.12.86**

(21) Application number: **82306874.7**

(22) Date of filing: **22.12.82**

(51) Int. Cl.⁴: **G 01 L 9/00,** G 01 L 9/06, H 01 L 29/84

(54) Semiconductor pressure transducer.

| | |
|---|---|
| (30) Priority: **04.01.82 US 336995** | (73) Proprietor: **HONEYWELL INC.** **Honeywell Plaza** **Minneapolis Minnesota 55408 (US)** |
| (43) Date of publication of application: **13.07.83 Bulletin 83/28** | (72) Inventor: **Starr, James B.** **1499 Hythe Street** **St. Paul Minnesota 55108 (US)** |
| (45) Publication of the grant of the patent: **03.12.86 Bulletin 86/49** | |
| (84) Designated Contracting States: **DE FR GB IT** | (74) Representative: **Frohwitter, Bernhard, Dipl.-Ing.** **Bardehle-Pagenberg-Dost-Altenburg & Partner** **Patent- und Rechtsanwälte Galileiplatz 1** **Postfach 86 06 20** **8000 München 80 (DE)** |
| (56) References cited: **DE-B-1 802 669** **DE-B-2 913 772** **GB-A-2 080 541** | |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

This invention relates to semiconductor pressure transducers.

The semiconductor pressure transducers known in the prior art employ a diagram responsive to the pressure differential across the two surfaces thereof. The transducer is formed of a single crystal semiconductor chip. A circular cavity is formed in one surface of the chip, and a cylindrical glass tube for communicating the pressure to be measured has one end thereof bonded to such one surface of the chip to surround the cavity. The diaphragm comprises the portion of the chip overlying the cavity. Stress sensors are disposed on the other surface of the chip above the cavity. Stress sensors which are widely used for this purpose exhibit a piezoresistive characteristic, whereby the resistance of the sensor varies with the stress experienced by the sensor as the stress in the chip changes with the differential pressure.

Normally at least one pair of radial stress sensors and one pair of circumferential stress sensors are disposed on the diaphragm. These sensors are electrically connected together, such as in a bridge circuit, to provide signals representing the differential pressure on the diaphragm.

Semiconductor pressure transducers of the type described generate false or spurious signals, termed "zero shift", as the static pressure (i.e., common to both surfaces of the diaphragm) or the temperature of the transducer varies. Specifically "zero shift" means a signal that changes as a result of some influence that occurs at zero pressure differential across the transducer diaphragm. Because of this zero shift phenomenon the semiconductor pressure transducer of the prior art requires some form of electronic signal compensation in order to be employed reliably for the measurement of differential pressures.

Prior art semiconductor pressure transducers have employed separate pressure sensors and separate temperature sensors to generate separate signals to separately compensate for the two sources of zero shift. However, it would be desirable to provide a single type of device capable of providing a single signal capable of compensating for both sources of zero shift.

Accordingly, it is an aim of the present invention to provide an improved semiconductor pressure transducer.

According to the present invention, there is provided a semiconductor pressure transducer comprising a single crystal semiconductor chip, a cavity formed in one surface of said chip to form a diaphragm region of the chip; a tube having one end thereof bonded to said one surface of said chip and surrounding said cavity; and at least one stress sensor disposed on the other surface of said chip within the diaphragm region, characterized in that at least one stress sensor is disposed on said other surface of said chip outside the diaphragm region to compensate for the occurrence of zero shift signals.

An embodiment of the invention will now be described by way of example only, with reference to the accompanying drawings, in which:—

Figure 1 is a top view of an embodiment of pressure transducer of the present invention;

Figure 2 is a central sectional view through the transducer of Figure 1; and

Figure 3 is a diagram of circuits for connecting together the sensors of the transducer of Figures 1 and 2.

Referring to the drawings, the semiconductor pressure transducer comprises a thin square semiconductor chip 1 composed of a single crystal semiconductor material, such as silicon.

A circular cavity 3, is formed in a lower surface of chip 1. A cylindrical tube 5 is bonded to the lower surface of chip 1 to surround cavity 3, and may be formed from a heat resistance glass such as Pyrex. Tube 5 functions to communicate the pressure to be sensed to cavity 3, whereby the portion of chip 1 overlying cavity 3 forms a diaphragm in which the stresses induced therein depend on the difference between the pressure communicated by the tube and the pressure on the upper surface of chip 1.

Radial stress sensors 13 and 14 are disposed on the upper surface of chip 1 above cavity 3, together with circumferential stress sensors 17 and 18. Sensors 13, 14, 17 and 18 are formed integrally with chip 1 by injecting, such as by diffusion, an impurity, such as boron, into the surface of chip 1 in surface regions above cavity 3 and defined according to the desired shapes of the sensors. Such a sensor exhibits a piezoresistive characteristic; i.e., its resistance changes with the stress experienced by the sensor.

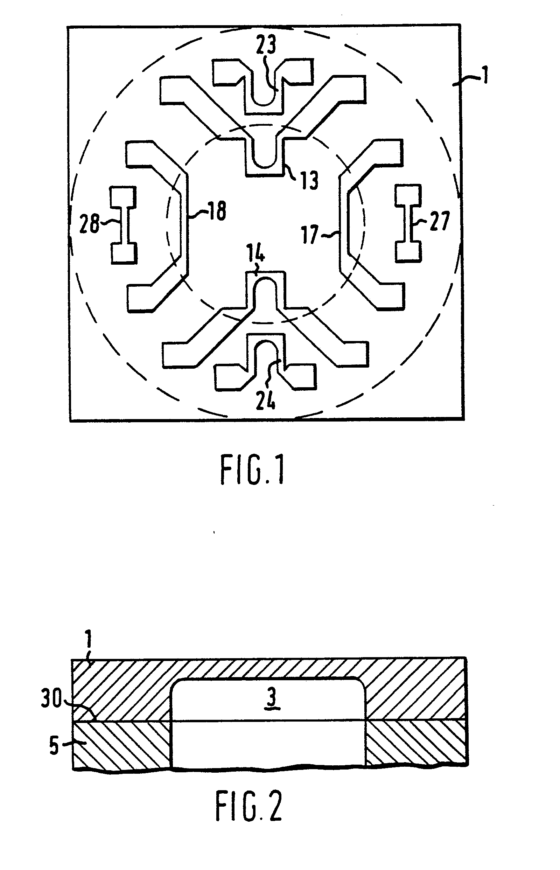

The stresses induced in chip 1 are sensed by the stress sensors, whose resistance varies correspondingly, and such stresses are generally described by reference to the axes of the sensors. In Figure 1, the sensing portions of sensors are shown in the form of strips. In practice a particular sensor may be formed of a plurality of parallel strips connected in series. Usually, these sensors are oriented in correspondence to the cylindrical coordinates of the cavity of pressure-communicating tube. Thus, sensors 13 and 14 of Figure 1 are disposed with the lengths of their sensing portions oriented along a radial direction of the cylindrical coordinates. Sensors 17 and 18 have the lengths of their sensing portions oriented along a circumferential (sometimes termed tangential) direction of the cylindrical coordinates and are symmetrically disposed about a radial direction of the coordinates.

While sensors 13, 14, 17 and 18 are principally responsive to the stresses induced in the diaphragm as a consequence of the amount of pressure difference on the two surfaces of the diaphragm, they are also responsive to the stresses occurring in the diaphragm even when the pressures on its two surfaces are equal and to variations in the temperature of the transducer.

One important source of the zero shift stresses due to pressure is the bond between the unlike materials of chip 1 and tube 5. Accordingly, when the sensors are connected into a signal generating circuit, such as a constant current Wheatstone bridge, false or spurious signals, (the zero shift signals), will be delivered by the circuit during zero pressure difference on the diaphragm. These zero shift signals also will be components of the total signal delivered when a finite pressure difference appears across the diaphragm.

To obviate this problem, the present transducer provides auxiliary sensors 23, 24, 27 and 28 which are principally responsive to those stresses occurring in the chip when the pressure difference across the diaphragm is zero and to those stress changes caused by variations in the temperature of the transducer. These auxiliary sensors are not significantly responsive to the stresses induced in the diaphragm as a consequence of pressure differences across the two surfaces of the diaphragm. Accordingly, when these auxiliary sensors are connected into a signal generating circuit, such as a constant current Wheatstone bridge, the circuit will deliver a signal whose principal components are the zero shift signals. The signal delivered by the latter circuit can then be used to cancel out the zero shift signal components in the signal provided by the circuit comprising the principal sensors 13, 14, 17 and 18, without significantly affecting the principal pressure-representing component of the latter signal.

Radial stress sensors 23 and 24 and circumferential sensors 27 and 28 are disposed on the upper surface of chip 1, i.e., vertically above the end surface 30 of tube 5, and therefore not on the diaphragm portion of the transducer. Sensors 23, 24, 27 and 28 exhibit a piezoresistive characteristic and may be formed in the same manner as previously described herein with respect to sensors 13, 14, 17 and 18.

With zero pressure difference across the diaphragm, stresses induced in the upper surface of the chip directly above the chip-tube bond are much larger than those produced in the diaphragm. On the other hand, stresses induced in the diaphragm surface by a pressure difference across its two surfaces are much larger than those produced on the upper surface of chip 1 above the chip-tube bond.

Accordingly, the signal generated by an auxiliary circuit formed of sensors 23, 24, 27 and 28 will comprise zero shift components corresponding to zero differential pressure which are relatively large compared to the components caused by a pressure difference on the diaphragm. Conversely, the signal generated by a principal circuit formed of sensors 13, 14, 17 and 18 will comprise components caused by a pressure difference in the diaphragm which are much larger than the zero shift components corresponding to zero differential pressure. By applying the signal delivered by the auxiliary circuit to that delivered by the principal circuit, the zero shift components in the two signals can be caused to be effectively cancelled, to leave a resultant signal representing only the pressure difference on the diaphragm.

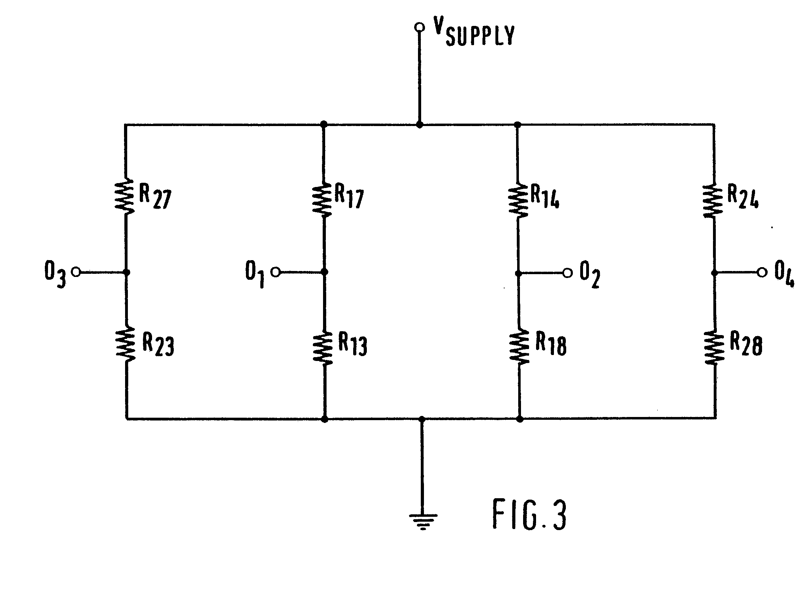

The circuits of Figure 3 are one form of signal generating circuits for use with the transducer of Figures 1 and 2. The circuits comprise a pair of bridges, each, in turn, comprising four resistive elements. Each resistive element represents the resistance of a correspondingly numbered sensor of the transducer of Figures 1 and 2. Thus, $R_{17}$ represents the resistance of sensor 17.

Sensors 13, 14, 17 and 18 are connected to form the principal bridge circuit, which delivers an output signal across output terminals $O_1$—$O_2$. Sensors 23, 24, 27 and 28 form the auxiliary bridge circuit, which delivers an output signal across output terminals $O_3$—$O_4$. According to the principles described previously herein, the signal delivered at output terminals $O_3$—$O_4$ has the zero shift components as its principal components, whereas the signal delivered at output terminals $O_1$—$O_2$ has the components representing the pressure difference on the diaphragm as its principal components. By means well-known in the art, both signals can be applied to an electronic compensating circuit to provide for the signal delivered by the auxiliary bridge circuit to effectively cancel any zero shift components in the signal delivered by the principal bridge circuit.

## Claims

1. A semiconductor pressure transducer comprising a single crystal semiconductor chip (1), a cavity (3) formed in one surface of said chip to form a diaphragm region of the chip; a tube (5) having one end thereof bonded to said one surface of said chip and surrounding said cavity; and at least one stress sensor (13, 14, 17, 18) disposed on the other surface of said chip within the diaphragm region, characterized in that at least one stress sensor (23, 24, 27, 28) is disposed on said other surface of said chip (1) outside the diaphragm region to compensate for the occurrence of zero shift signals.

2. The transducer of Claim 1, wherein said tube (5) is formed of a material different from that of the material of said chip (1).

3. The transducer of Claim 2, wherein said tube (5) is heat resistant glass such as Pyrex.

4. The transducer of Claim 1, 2 or 3, wherein a plurality of stress sensors (13, 14, 17, 18) in the diaphragm region are electrically connected to form a first bridge circuit, and a plurality of stress sensors (23, 24, 27, 28) outside the diaphragm region are electrically connected to form a second bridge circuit.

## Patentansprüche

1. Halbleiter-Druckumformer mit einem Einkristallhalbleiterkörper (1), einem zur Bildung eines Membranbereichs des Halbleiterkörpers dienenden Hohlraum (3) in einer Oberfläche des Halbleiterkörpers, einem mit einem Ende an der genannten Oberfläche befestigten und den Hohlraum umgebenden Rohr, sowie wenigstens einem im Membranbereich auf der anderen Oberfläche des Halbleiterkörpers (1) vorgesehenen spannungsempfindlichen Fühler (13, 14, 17, 18); dadurch gekennzeichnet, daß wenigstens ein spannungsempfindlicher Fühler (23, 24, 27, 28) auf der anderen Oberfläche des Halbleiterkörpers (1) außerhalb des Membranbereichs angeordnet ist, um das Auftreten von Nullverschiebungssignalen zu kompensieren.

2. Umformer nach Anspruch 1, dadurch gekennzeichnet, daß das Rohr (5) aus einem anderen Material besteht als der Halbleiterkörper (1).

3. Umformer nach Anspruch 2, dadurch gekennzeichnet, daß das Rohr aus wärmebeständigem Glas, beispeilsweise Pyrex besteht.

4. Umformer nach Anspruch 1, 2 oder 3, bei dem mehrere spannungsempfindliche Fühler (13, 14, 17, 18) im Membranbereich zu einer ersten Brückenschaltung miteinander verbunden sind und eine Mehrzahl von spannungsempfindlichen Fühlern (23, 24, 27, 28) außerhalb des Membranbereichs elektrisch zu einer zweiten Brückenschaltung zusammengeschaltet sind.

**Revendications**

1. Transducteur de pression à semiconducteur comprenant une pastille de semiconducteur monocristallin (1), une cavité (3) formée dans une surface de la pastille pour constituer une région de diaphragme de la pastille; un tube (5) ayant une de ses extrémités soudée à ladite surface de la pastille et entourant la cavité; et au moins un capteur de contrainte (13, 14, 17, 18) placé sur l'autre surface de la pastille dans la région de diaphragme, caractérisé en ce qu'au moins un capteur de contrainte (23, 24, 27, 28) est placé sur l'autre surface de la pastille (1) à l'extérieur de la région de diaphragme pour compenser l'apparition de signaux de déviation nulle.

2. Transducteur selon la revendication 1, dans lequel le tube (5) est constitué d'un matériau différent du matériau de la pastille (1).

3. Transducteur selon la revendication 2, dans lequel le tube (5) est en verre résistant à la chaleur tel que le Pyrex.

4. Transducteur selon l'une quelconque des revendications 1 à 3, dans lequel un ensemble de capteurs de contrainte (13, 14, 17, 18) situés dans la région de diaphragme sont connectés électriquement pour constituer un premier circuit en pont, et dans lequel un ensemble de capteurs de contrainte (23, 24, 27, 28) situés hors de la région de diaphragme sont connectés électriquement pour constituer un second circuit en pont.

FIG.1

FIG.2

FIG.3